# EUROPÄISCHE PATENTANMELDUNG

(11) **EP 0 633 440 A1**
(43) Veröffentlichungstag der Anmeldung: **11.01.1995**
(21) Anmeldenummer: 94109250.4
(22) Anmeldetag: 16.06.1994
(51) Int. Cl.: F27D 5/00, B28B 7/34, B22F 3/10

(54) **Verfahren zur Herstellung eines Setters**

(30) Priorität: 02.07.1993 DE 4322084
(71) Anmelder: ABB RESEARCH LTD., CH-8050 Zürich 11 (CH)
(72) Erfinder: Fried, Reinhard, Dipl. Masch. Ing., CH-5415 Nussbaumen (CH)
(74) Vertreter: Kaiser, Helmut, Dr.

(57) **Zusammenfassung**

Die Erfindung geht aus von einem Verfahren zur Herstellung eines Setters, welcher dafür vorgesehen ist, einen aufgelegten Rohling während eines Sintervorgangs formschlüssig abzustützen.

Es soll ein Verfahren zur Herstellung des Setters, welcher der Form des jeweiligen zu sinternden Rohlings angepasst ist und welcher beim Sintern gemeinsam mit dem Rohling und im gleichen Umfang wie dieser schrumpft, geschaffen werden. Dies wird dadurch erreicht, dass der Setter mit folgenden Verfahrensschritten aus einem speziellen, mit einem Binder versehenen pulverförmigen Material hergestellt wird:
a) Einfüllen des pulverförmigen Materials in eine Rohform,
b) Pressen des pulverförmigen Materials in der geschlossenen Rohform zu einem Grünling,
c) Entnehmen des gepressten Grünlings aus der Rohform,
d) Vorsintern des Grünlings zu einem Setterrohling, und
e) Spanabhebende Bearbeitung des Setterrohlings zum fertigen Setter.

## Beschreibung

### TECHNISCHES GEBIET

Die Erfindung geht aus von einem Verfahren zur Herstellung eines Setters, welcher dafür vorgesehen ist, einen aufgelegten Rohling während eines Sintervorgangs formschlüssig abzustützen.

### STAND DER TECHNIK

Derartige Setter für den Einsatz bei Sinterverfahren werden insbesondere bei der Herstellung von Formteilen aus pulverförmigen keramischen oder metallischen Grundstoffen eingesetzt. Beim Sintern von nicht ebenen Rohlingen zu Formteilen, wie beispielsweise bei der Herstellung von Turbinenschaufeln, werden an die diese Rohlinge vor und während des Sinterns stützenden Setter besondere Anforderungen gestellt. Der Setter darf das schrumpfen der Rohlinge keinesfalls behindern und muss verhindern, dass die geringe Festigkeit der Rohlinge während des Sinterns zu unzulässigen Deformationen derselben führt. Insbesondere hohl liegende Partien der Rohlinge sind wegen ihres Eigengewichts anfällig für derartige Deformationen. Das Schrumpfen des Rohlings darf zudem nicht durch Reibungskräfte zwischen Rohling und Auflage behindert werden. Um diese Reibungskräfte klein zu halten, werden häufig aufwendig herzustellende, hochglanzpolierte Auflageflächen für die Auflage des Rohlings eingesetzt.

Aus der Patentanmeldung EP 0 472 469 A1 ist ein Setter für den Einsatz bei einem Sinterverfahren bekannt, welcher sich während des jeweiligen Sintervorgangs nicht deformiert. Dieser Setter weist eine günstige Form auf, welche eine gleitende Bewegung des schrumpfenden Rohlings ermöglicht, ohne dass durch allzu grosse Reibung zwischen Rohling und Setter unzulässige Deformationen des Rohlings verursacht werden. Dieser Setter ist nur bei Rohlingen mit konisch ausgebildeten Aussenflächen vorteilhaft einzusetzen.

### DARSTELLUNG DER ERFINDUNG

Hier will die Erfindung Abhilfe schaffen. Die Erfindung, wie sie in den Ansprüchen gekennzeichnet ist, löst die Aufgabe, ein Verfahren zur Herstellung eines Setters zu schaffen, welcher der Form des jeweiligen zu sinternden Rohlings angepasst ist und welcher beim Sintern gemeinsam mit dem Rohling und im gleichen Umfang wie dieser schrumpft.

Die durch die Erfindung erreichten Vorteile sind im wesentlichen darin zu sehen, dass die formschlüssige Abstützung durch den mitschrumpfenden Setter während des gesamten Sintervorgangs voll wirksam ist, sodass der Rohling stets besonders gut gegen Deformationen geschützt ist.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 ein erstes Blockdiagramm eines erfindungsgemässen Verfahrens,
Fig.2 ein zweites Blockdiagramm eines erfindungsgemässen Verfahrens,
Fig.3 ein drittes Blockdiagramm eines erfindungsgemässen Verfahrens,
Fig.4 ein viertes Blockdiagramm eines erfindungsgemässen Verfahrens,
Fig.5 einen auf einem Setter liegenden, zu sinternden Rohling, und
Fig.6 einen Schnitt durch die Anordnung gemäss Fig.5.

Alle für das unmittelbare Verständnis der Erfindung nicht erforderlichen Elemente sind in der Zeichnung nicht dargestellt.

### WEGE ZUR AUSFÜHRUNG DER ERFINDUNG

### 1.Ausführungsbeispiel:

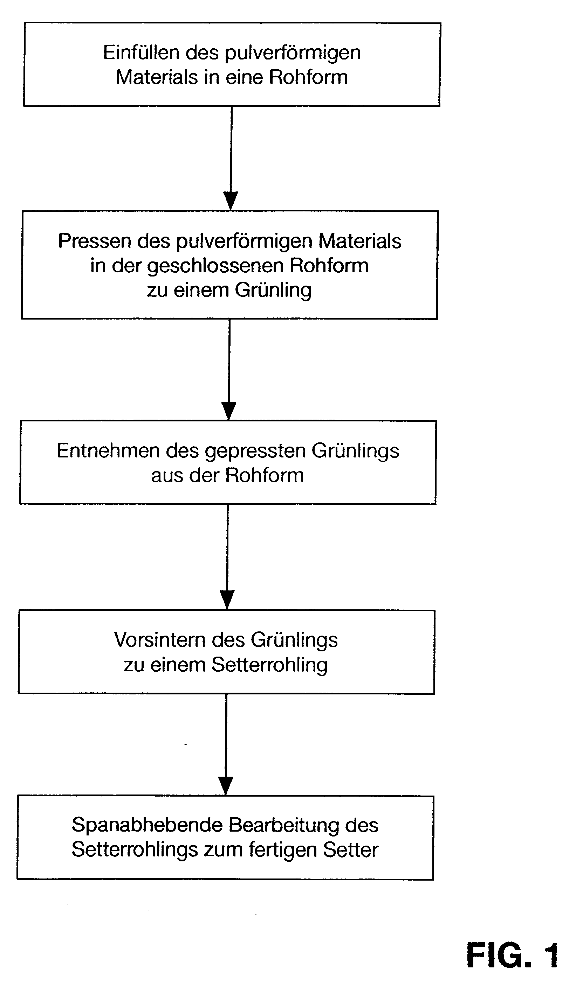

Die Fig.1 zeigt ein schematisch dargestelltes, erstes Blockdiagramm eines Verfahrens zur Herstellung eines Setters aus einem pulverförmigen Material. Dieses Verfahren weist folgende Verfahrensschritte auf:
a) Einfüllen des pulverförmigen Materials in eine Rohform,
b) Pressen des pulverförmigen Materials in der geschlossenen Rohform zu einem Grünling,
c) Entnehmen des gepressten Grünlings aus der Rohform,
d) Vorsintern des Grünlings zu einem Setterrohling, und
e) Spanabhebende Bearbeitung des Setterrohlings zum fertigen Setter.

Bei diesem Verfahren zur Herstellung eines Setters wird pulverförmiges Material, Aluminiumoxid KER 610 DIN 40685, welches nach einem der bekannten Verfahren durch die Firma Hutschenreuther, Keramische Rohstoffe und Massen, Werk Massemühle Wagner, D-8632 Neustadt, hergestellt wurde, verwendet. Das pulverförmige Material ist mit einem Binder versehen.Das Material wird als Sprühkorn 607 X 75 bezeichnet und weist ein Schüttgewicht von 1040 bis 1060 g/l auf. Eine Siebanalyse ergab folgende Partikelgrössen:
10% mit 630 µm,
30% mit 400 µm,
35% mit 315 µm,
15% mit 200 µm,
10% mit <200 µm.

Eine chemische Analyse ergab die folgende Zusammensetzung des Materials:

| | |
|---|---|
| Si O₂ | 17,3% |
| Al₂ O₃ | 78,8% |
| Ti O₂ | 0,08% |
| Fe₂ O₃ | 0,19% |
| Ca O | 0.20% |
| Mg O | 0,63% |
| K₂ O | 1,41% |
| Na₂ O | 0,90% |

Das pulverförmige Material wird in eine quaderförmige Rohform aus Metall eingefüllt. Die inneren Abmessungen dieser Rohform müssen denen des fertigen Setters nur grob angenähert sein. Das in die Rohform eingefüllte pulverförmige Material wird durch ein mechanisches Pressen zu einem Grünling verdichtet. Es wird dabei ein Druck von 12960 kg aufgebracht, dies entspricht einem spezifischen Druck von 180 kg/cm². Nach diesem Verdichten wird der Grünling aus der Rohform entnommen und es folgt dann ein Sintervorgang, bei dem der Grünling zum Setter zusammensintert. Beim Sintern wird der Grünling gleichmässig in Stufen von 1 °C/min auf die Sintertemperatur von 900 °C gebracht, wird dann 15 Minuten auf dieser Temperatur gehalten und wird anschliessend in Stufen von 4 °C/min abgekühlt. Wird das Sintern sorgfältig durchgeführt, so wird dadurch ein Setterrohling geschaffen, der eine ausserordentlich homogene Dichteverteilung und ein homogenes Gefüge aufweist. Das Sintern erfolgt bei Umgebungsdruck, als Ofenatmosphäre wird Luft verwendet.

Nach der Entnahme des Setterrohlings aus der Rohform wird er spanabhebend weiter bearbeitet, insbesonders eignet sich hierfür das Hochgeschwindigkeitsfräsen. Es ist jedoch auch möglich, konventionelle spanabhebende Bearbeitungsverfahren einzusetzen oder auch eine Kombination von konventionellen Bearbeitungsverfahren mit dem Hochgeschwindigkeitsfräsen. Bei einer derartigen Kombination wird das Hochgeschwindigkeitsfräsen vorteilhaft als letzter Bearbeitungsschritt eingesetzt, da so eine besonders gute Oberflächenqualität des fertigen Setters erreicht wird.

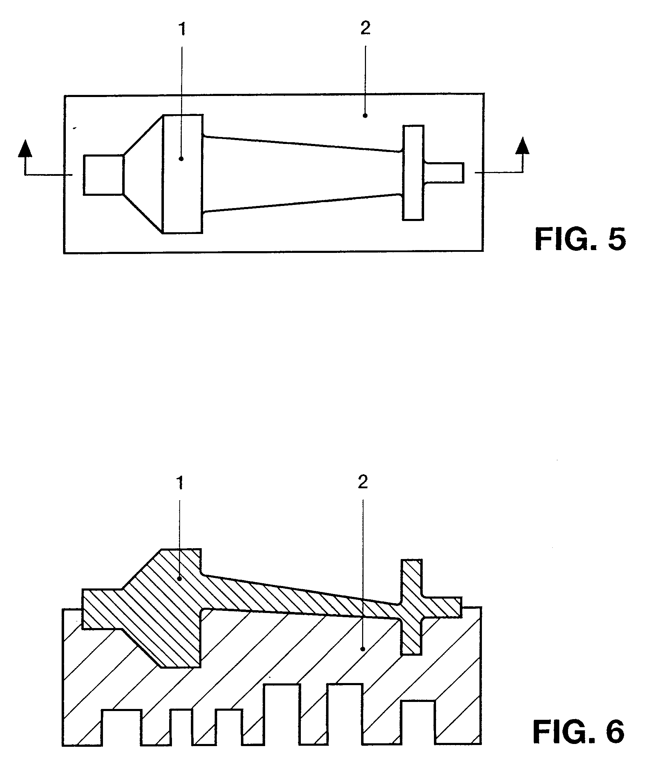

Der zu sinternde Rohling wird dann auf den mechanisch fertig bearbeiteten Setter gelegt, wie es in den Fig.5 und 6 dargestellt ist. Als Rohling wird hier eine schematisch dargestellte Turbinenschaufel 1 gezeigt. Der im wesentlichen quaderförmig ausgebildete Setter 2 ist hier an seiner Oberfläche so gestaltet, dass er die Unterseite der aufgelegten Turbinenschaufel 1 formschlüssig abstützt. Auf der Unterseite ist der Setter 2 mit verschiedenen Aussparungen 3 versehen, die die Auflagefläche des Setters 2 und damit auch die Reibungskräfte zwischen dem Setter 2 und der ihn tragenden Fläche verkleinern sollen. Es sind die verschiedensten Formen von Aussparungen denkbar. Der Setter 2 wird mit der darauf liegenden Turbinenschaufel 1 in einen Sinterofen eingebracht und gemeinsam mit dieser dem Sintervorgang unterworfen. Der Setter ist so ausgebildet, dass er während des gesamten Sintervorgangs den Rohling formschlüssig abstützt und ihn so vor etwaigen Deformationen bewahrt. Als besonders günstig wirkt es sich aus, dass der Setter im gleichen Masse schrumpft wie das Material des zu sinternden Rohlings. Derartige mitschrumpfende Setter sind besonders dort von Vorteil, wo Rohlinge mit vergleichsweise komplizierten Formen formschlüssig zu stützen sind. Nach dem Abschluss des Sintervorganges wird der Setter 2 mit der Turbinenschaufel 1 aus dem Sinterofen entnommen. Die Turbinenschaufel 1 wird dann als fertiges, definitiv ausgebildetes Formteil vom Setter 2 gelöst.

Auch bei diesem Sintervorgang wird der Temperaturanstieg bis zur Sintertemperatur, die Verweildauer bei dieser Temperatur und der nachfolgende Abkühlvorgang dem jeweiligen zu sinternden Material optimal angepasst. Bei diesem Sintervorgang kann das zu sinternde Material mit Hilfe der Ofenatmosphäre gegebenenfalls gleichzeitig chemisch beeinflusst werden. Dank der porösen Struktur des Rohlings bei Beginn des Sintervogangs kann die Ofenatmosphäre bis in dessen Inneres einwirken, sodass eine ganze Palette von Einflussnahmen möglich ist. Wird eine stickstoffhaltige Ofenatmosphäre gewählt, so erfolgt ein Nitrieren des Rohlings und damit eine vorteilhafte Festigkeitserhöhung desselben. Eine kohlenstoffhaltige Ofenatmosphäre ermöglicht ein Aufkohlen. Es bestehen daneben noch viele weitere Möglichkeiten des Gradierens.

### 2.Ausführungsbeispiel:

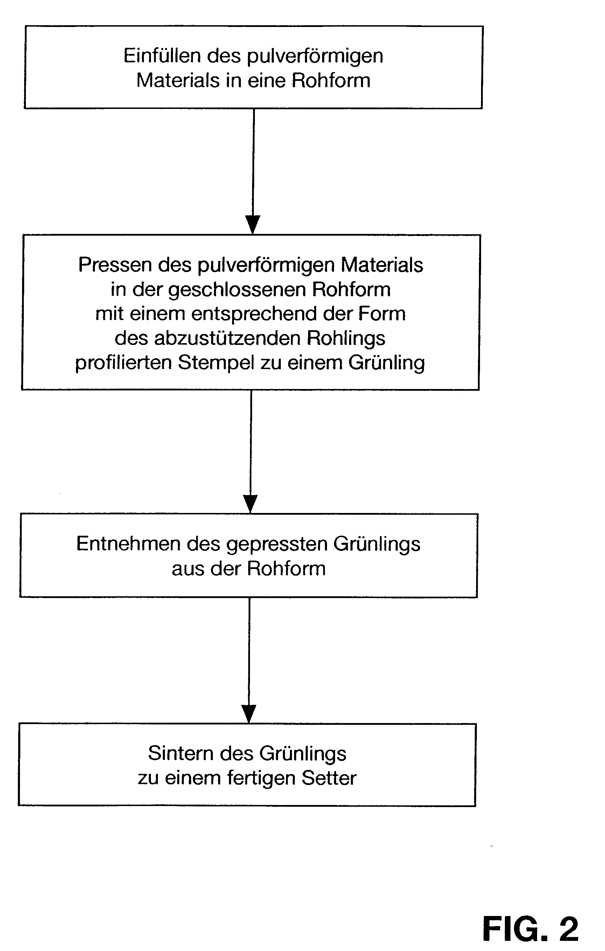

Die Fig.2 zeigt ein schematisch dargestelltes, zweites Blockdiagramm eines Verfahrens zur Herstellung eines Setters aus einem pulverförmigen Material. Dieses Verfahren weist folgende Verfahrensschritte auf:
a) Einfüllen des pulverförmigen Materials in eine Rohform,
b) Pressen des pulverförmigen Materials in der geschlossenen Rohform mit einem entsprechend der Form des abzustützenden Rohlings profilierten Stempel zu einem Grünling,
c) Entnehmen des gepressten Grünlings aus der Rohform, und
d) Sintern des Grünlings zu einem fertigen Setter.

Dieses Verfahren unterscheidet sich von demjenigen, welches als erstes Ausführungsbeispiel beschrieben wurde, lediglich dadurch, dass die Formgebung des Setters bereits beim Pressen des Grünlings erfolgt, sodass die spanabhebende Bearbeitung des Setterrohlings zum fertigen Setter entfällt. Dieses Verfahren ist vergleichsweise einfach, da ein aufwendiger Verfahrensschritt eingespart werden kann, es ist besonders für die Herstellung grosser Serien von gleichen Settern gut geeignet.

### 3.Ausführungsbeispiel:

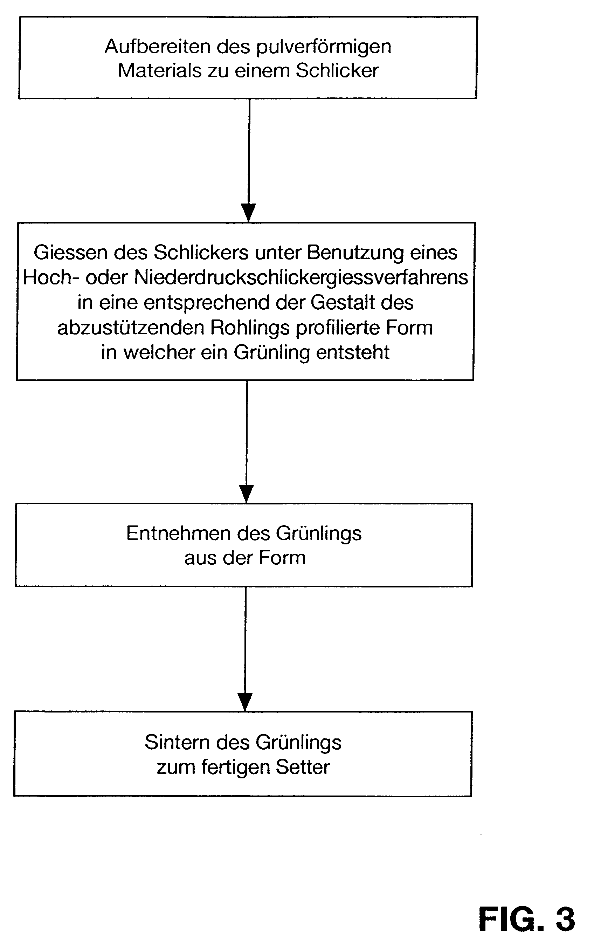

Die Fig.3 zeigt ein schematisch dargestelltes, drittes Blockdiagramm eines Verfahrens zur Herstellung eines Setters aus einem pulverförmigen Material. Dieses Verfahren weist folgende Verfahrensschritte auf:
a) Aufbereiten des pulverförmigen Materials zu einem Schlicker,
b) Giessen des Schlickers unter Benutzung eines Hoch- oder Niederdruckschlickergiessverfahrens in eine entsprechend der Gestalt des abzustützenden Rohlings profilierte Form in welcher ein Grünling entsteht,
c) Entnehmen des Grünlings aus der Form, und
d) Sintern des Grünlings zum fertigen Setter.

Bei diesem Verfahren zur Herstellung eines Setters wird pulverförmiges Material nach einem der bekannten Verfahren zu einer Masse verarbeitet. Diese Masse mit der Bezeichnung "Pozellan-Giess-Masse Nr.406" wird durch die Firma Hutschenreuther, Keramische Rohstoffe und Massen, Werk Massemühle Wagner, D-8632 Neustadt, vertrieben. Sie wird mittels Wasser, dem ein Verflüssiger zugesetzt wird, zu einem giessfähigen Schlicker verarbeitet. Der Verflüssiger ist der Härte des verwendeten Wassers entsprechend anzupassen. Hier wurde als Verflüssiger eine Mischung der Verflüssigungsmittel Giessfix 162/10 und Formsil D eingesetzt.

Eine chemische Analyse ergab die folgende Zusammensetzung der Masse:

| | |
|---|---|
| Si O₂ | 67,8% |
| Al₂ O₃ | 25,4% |
| Ti O₂ | 0,06% |
| Fe₂ O₃ | 0,48% |
| Mg O | 0,63% |
| Ca O | o.71% |
| K₂ O | 4,45% |
| Na₂ O | 0,15% |

Der Schlicker wird unter Benutzung eines der bekannten Hoch- oder Niederdruckschlickergiessverfahrens in eine entsprechend der Gestalt des abzustützenden Rohlings profilierte Giessform gegossen. Als Giessformen werden in der Regel Gips- oder Kunststoff- Formen verwendet, es sind jedoch auch Formen aus anderen Materialien möglich. In der Giessform entsteht ein Grünling mit einer dem zu sinternden Rohling angenähert angepassten Auflagefläche für die Aufnahme des Rohlings. Danach wird der Grünling aus der Rohform entnommen und es folgt ein Sintervorgang, bei dem der Grünling zum fertigen Setter zusammensintert. Beim Sintern wird der Grünling gleichmässig in Stufen von 1 °C/min auf die Sintertemperatur von 900 °C gebracht, wird dann 15 Minuten auf dieser Temperatur gehalten und wird anschliessend in Stufen von 4 °C/min abgekühlt. Wird das Sintern sorgfältig durchgeführt, so wird dadurch ein Setterrohling geschaffen, der eine ausserordentlich homogene Dichteverteilung und ein homogenes Gefüge aufweist. Das Sintern erfolgt bei Umgebungsdruck, als Ofenatmosphäre wird Luft verwendet. Bei diesem Verfahren entsteht ein dünnwandiger Setter, der für bestimmte Anwendungen, wie beispielsweise für die Herstellung von Turbinenschaufeln, besonders gut geeignet ist.

Der zu sinternde Rohling wird dann auf den fertigen Setter mit der ihm angepassten Auflagefläche gelegt, wie es in den Fig.5 und 6 dargestellt ist. Als Rohling wird hier eine schematisch dargestellte Turbinenschaufel 1 gezeigt. Der im wesentlichen quaderförmig ausgebildete Setter 2 ist hier an seiner Oberfläche so gestaltet, dass er die Unterseite der aufgelegten Turbinenschaufel 1 formschlüssig abstützt. Auf der Unterseite ist der Setter 2 mit verschiedenen Aussparungen 3 versehen, die die Auflagefläche des Setters 2 und damit auch die Reibungskräfte zwischen dem Setter 2 und der ihn tragenden Fläche verkleinern sollen. Es sind die verschiedensten Formen von Aussparungen denkbar. Der Setter 2 wird mit der darauf liegenden Turbinenschaufel 1 in einen Sinterofen eingebracht und gemeinsam mit dieser dem Sintervorgang unterworfen. Der Setter ist so ausgebildet, dass er während des gesamten Sintervorgangs den Rohling formschlüssig abstützt und ihn so vor etwaigen Deformationen bewahrt. Als besonders günstig wirkt es sich aus, dass der Setter im gleichen Masse schrumpft wie das Material des zu sinternden Rohlings. Derartige mitschrumpfende Setter sind besonders dort von Vorteil, wo Rohlinge mit vergleichsweise komplizierten Formen formschlüssig zu stützen sind. Nach dem Abschluss des Sintervorganges wird der Setter 2 mit der Turbinenschaufel 1 aus dem Sinterofen entnommen. Die Turbinenschaufel 1 wird dann als fertiges, definitiv ausgebildetes Formteil vom Setter 2 gelöst. Auch bei diesem Sintervorgang wird der Temperaturanstieg bis zur Sintertemperatur, die Verweildauer bei dieser Temperatur und der nachfolgende Abkühlvorgang dem jeweiligen zu sinternden Material optimal angepasst.

### 4.Ausführungsbeispiel:

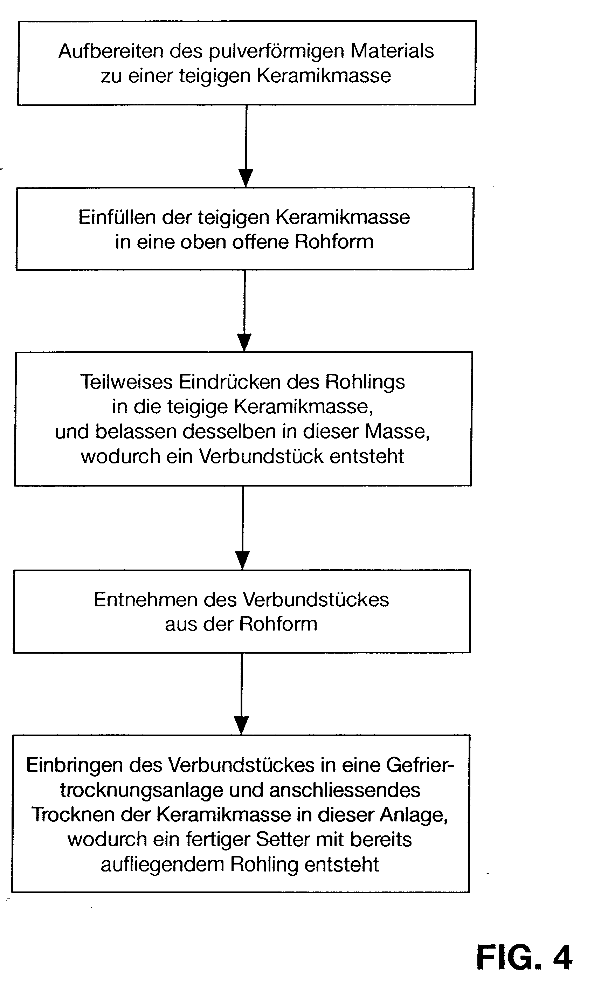

Die Fig.4 zeigt ein schematisch dargestelltes, viertes Blockdiagramm eines Verfahrens zur Herstellung eines Setters aus einem pulverförmigen Material. Dieses Verfahren weist folgende Verfahrensschritte auf:
a) Aufbereiten des pulverförmigen Materials zu einer teigigen Keramikmasse,
b) Einfüllen der teigigen Keramikmasse in eine oben offene Rohform,
c) Teilweises Eindrücken des Rohlings in die teigige Keramikmasse und belassen desselben in dieser Masse, wodurch ein Verbundstück entsteht,
d) Entnehmen des Verbundstücks aus der Rohform, und
e) Einbringen des Verbundstücks in eine Gefriertrocknungsanlage und anschliessendes Trocknen der Keramikmasse in dieser Anlage, wodurch ein fertiger Setter mit bereits aufliegendem Rohling entsteht.

Bei diesem Verfahren zur Herstellung eines Setters wird pulverförmiges Material nach einem der bekannten Verfahren zu einer Masse verarbeitet. Diese Masse mit der Bezeichnung "Pozellan-Giess-Masse Nr.406" wird durch die Firma Hutschenreuther, Keramische Rohstoffe und Massen, Werk Massemühle Wagner, D-8632 Neustadt, vertrieben. Eine chemische Analyse ergab eine ähnliche Zusammensetzung der Masse wie in dem dritten Ausführungsbeispiel angegeben. Die Masse wird mittels Wasser, dem ein Verflüssiger und ein Binder zugesetzt wird, zu einer Keamikmasse mit teigiger Konsistenz verarbeitet. Der Verflüssiger ist der Härte des verwendeten Wassers entsprechend anzupassen. Hier wurde als Verflüssiger eine Mischung der Verflüssigungsmittel Giessfix 162/10 und Formsil D eingesetzt. Als Binder wurde ein Material, wie es durch die Formel CₓH_{y}O_{z} gekennzeichnet wird, beigemischt. Hier wurden der Porzellan-Giess-Masse beispielsweise 8% (Gewichtsprozent) Methylzellulose
zugegeben. Anschliesend wurden noch 1% Al₂ₓO₃, welches eine Korngrösse von 5µm aufwies, beigemengt.

Diese teigige Keramikmasse wird dann in eine oben offene Rohform eingefüllt. In die teigige Keramikmasse wird der Rohling von oben her teilweise eingedrückt, wobei sich die teigige Keramikmasse dem zu sinternden Rohling genau anpasst. Der Rohling wird dann in der teigigen Keramikmasse belassen, sodass ein Verbundstück entsteht. Das Verbundstück wird danach aus der Rohform entnommen und in eine Gefriertrocknungsanlage eingebracht. In der Gefriertrocknungsanlage wird dem Verbundstück die Feuchtigkeit entzogen und es entsteht ein fertiger Setter mit einem bereits aufliegenden, zu sinternden Rohling, wie es in den Fig.5 und 6 dargestellt ist. Als Rohling wird hier eine schematisch dargestellte Turbinenschaufel 1 gezeigt. Der im wesentlichen quaderförmig ausgebildete Setter 2 ist hier an seiner Oberfläche so gestaltet, dass er die Unterseite der aufgelegten Turbinenschaufel 1 formschlüssig abstützt. Auf der Unterseite ist der Setter 2 mit verschiedenen Aussparungen 3 versehen, die die Auflagefläche des Setters 2 und damit auch die Reibungskräfte zwischen dem Setter 2 und der ihn tragenden Fläche verkleinern sollen. Es sind die verschiedensten Formen von Aussparungen denkbar. Der Setter 2 wird mit der darauf liegenden Turbinenschaufel 1 in einen Sinterofen eingebracht und gemeinsam mit dieser dem Sintervorgang unterworfen. Der Setter ist so ausgebildet, dass er während des gesamten Sintervorgangs den Rohling formschlüssig abstützt und ihn so vor etwaigen Deformationen bewahrt. Als besonders günstig wirkt es sich aus, dass der Setter im gleichen Masse schrumpft wie das Material des zu sinternden Rohlings. Derartige mitschrumpfende Setter sind besonders dort von Vorteil, wo Rohlinge mit vergleichsweise komplizierten Formen formschlüssig zu stützen sind. Nach dem Abschluss des Sintervorganges wird der Setter 2 mit der Turbinenschaufel 1 aus dem Sinterofen entnommen. Die Turbinenschaufel 1 wird dann als fertiges, definitiv ausgebildetes Formteil vom Setter 2 gelöst. Auch bei diesem Sintervorgang wird der Temperaturanstieg bis zur Sintertemperatur, die Verweildauer bei dieser Temperatur und der nachfolgende Abkühlvorgang dem jeweiligen zu sinternden Material optimal angepasst.

Der Rohling kann aus verschiedenen Materialzusammensetzungen bestehen, die jeweils ein unterschiedliches Schrumpfverhalten aufweisen. Der Setter kann im hier interessierenden Bereich dem Schrumpfverhalten des Rohlings angepasst werden. Die in den Ausführungsbeispielen angegebenen Fertigungsparameter können individuell dem jeweiligen zu sinternden Rohling angepasst werden. Folgende Parameter können beispielsweise variiert werden: Zusammensetzung und Körnung des pulverförmigen Materials, Pressdruck, Sintertemperatur, Sinterddauer, Form der Aufheiz- und Abkühlrampen. Zudem können auch unterschiedliche Bindemittel und unterschiedliche Verflüssigungsmittel eingesetzt werden. Es steht demnach eine breite Palette von dem jeweiligen Einsatzbereich angepassten mitschrumpfenden Settern zur Verfügung.

### BEZEICHNUNGSLISTE

- 1: Turbinenschaufel
- 2: Setter
- 3: Aussparung

## Patentansprüche

1. Verfahren zur Herstellung eines Setters, welcher dafür vorgesehen ist, einen aufgelegten Rohling während eines Sintervorgangs formschlüssig abzustützen, wobei das schrumpfverhalten des Setters demjenigen des Rohlings, für dessen Aufnahme er ausgebildet ist, angepasst ist, sodass die Abstützung durch den Setter während des gesamten Sintervorgangs wirksam ist, bei welchem der Setter mit folgenden Verfahrensschritten aus einem mit einem Binder versehenen pulverförmigen Material hergestellt wird:
a) Einfüllen des pulverförmigen Materials in eine Rohform,
b) Pressen des pulverförmigen Materials in der geschlossenen Rohform zu einem Grünling,
c) Entnehmen des gepressten Grünlings aus der Rohform,
d) Vorsintern des Grünlings zu einem Setterrohling, und
e) Spanabhebende Bearbeitung des Setterrohlings zum fertigen Setter.

2. Verfahren zur Herstellung eines Setters nach Anspruch 1, dadurch gekennzeichnet,
- dass das Pressen des pulverförmigen Materials in der geschlossenen Rohform zu einem Grünling mit einem entsprechend der Form des abzustützenden Rohlings profilierten Stempel erfolgt, sodass die spanabhebende Bearbeitung des Setterrohlings zum fertigen Setter entfällt.

3. Verfahren zur Herstellung eines Setters nach Anspruch 1, dadurch gekennzeichnet,
- dass für die spanabhebende Bearbeitung des Setterrohlings ein Hochgeschwindigkeits-Fräsverfahren vorgesehen ist.

4. Verfahren zur Herstellung eines Setters, welcher dafür vorgesehen ist, einen aufgelegten Rohling während eines Sintervorgangs formschlüssig abzustützen, wobei das schrumpfverhalten des Setters demjenigen des Rohlings, für dessen Aufnahme er ausgebildet ist, angepasst ist, sodass die Abstützung durch den Setter während des gesamten Sintervorgangs wirksam ist, bei welchem der Setter mit folgenden Verfahrensschritten aus einem mit einem Binder versehenen pulverförmigen Material hergestellt wird:
a) Aufbereiten des pulverförmigen Materials zu einem Schlicker,
b) Giessen des Schlickers unter Benutzung eines Hoch- oder Niederdruckschlickergiessverfahrens in eine entsprechend der Gestalt des abzustützenden Rohlings profilierte Form in welcher ein Grünling entsteht,
c) Entnehmen des Grünlings aus der Form, und
d) Sintern des Grünlings zum fertigen Setter.

5. Verfahren zur Herstellung eines Setters, welcher dafür vorgesehen ist, einen aufgelegten Rohling während eines Sintervorgangs formschlüssig abzustützen, wobei das Schrumpfverhalten des Setters demjenigen des Rohlings, für dessen Aufnahme er ausgebildet ist, angepasst ist, sodass die Abstützung durch den Setter während des gesamten Sintervorgangs wirksam ist, bei welchem der Setter mit folgenden Verfahrensschritten aus einem mit einem Binder versehenen pulverförmigen Material hergestellt wird:
a) Aufbereiten des pulverförmigen Materials zu einer teigigen Keramikmasse,
b) Einfüllen der teigigen Keramikmasse in eine oben offene Rohform,
c) Teilweises Eindrücken des Rohlings in die teigige Keramikmasse und belassen desselben in dieser Masse, wodurch ein Verbundstück entsteht,
d) Entnehmen des Verbundstücks aus der Rohform, und
e) Einbringen des Verbundstücks in eine Gefriertrocknungsanlage und anschliessendes Trocknen der Keramikmasse in dieser Anlage, wodurch ein fertiger Setter mit bereits aufliegendem Rohling entsteht.
